# EUROPEAN PATENT SPECIFICATION

(11) **EP 0 886 901 B1**
(45) Date of publication and mention of the grant of the patent: **25.10.2000**
(21) Application number: 97907203.0
(22) Date of filing: 13.03.1997
(51) Int. Cl.: H02B 13/065

(54) **SWITCHGEAR DEVICE**
SCHALTVORRICHTUNG
APPAREIL DE COMMUTATION

(30) Priority: 14.03.1996 GB 9605367
(43) Date of publication of application: 30.12.1998
(73) Proprietor: THE NATIONAL GRID COMPANY plc, Coventry, CV4 8JY (GB)
(72) Inventor: PILLING, Neil, Leatherhead, Surrey KT22 7ST (GB)
(74) Representative: Roberts, Gwilym Vaughan
(86) International application number: GB9700702
(87) International publication number: WO9734349

(56) References cited:
- EP-A- 0 216 037
- FR-A- 2 649 245
- FR-A- 2 698 696
- FR-A- 2 720 511
- US-A- 3 962 609

## Description

This invention relates to a switchgear device.

Power lines in a substation of an electrical transmission network typically operate at a potential several hundred kilovolts (kV) above ground potential. The lowest voltage on the British electrical transmission network, for example, is about 145kV before it is stepped down for electrical distribution.

Switchgear for a substation typically includes circuit breakers of the kind having a fixed and a moving contact. The moving contact is powered in response to a trip signal. Typical voltages handled by such circuit breakers are between 145kV and 300kV. For the higher voltages of around 420kV, a double contact is currently used. The conventional circuit breaker is usually housed in a porcelain stack which acts as an insulator.

It is accordingly common to employ voltage transformers between the power line and ground to step down the very high voltage to a smaller voltage which is suitable for monitoring and driving protection devices, which in turn trip circuit breakers.

An example of a known switchgear device is given by FR-A-2 649 245, which includes a capacitor voltage divider formed from two series of connected capacitors.

A typical voltage transformer for use at high voltage is most commonly of the capacitor divider type. A plurality of capacitors is linked in series between the power line, at several hundred kV, and ground. Each capacitor drops a fraction of the total potential difference between these two points, and a voltage proportional to the line voltage is tapped off the capacitor closest to ground.

Typically, capacitor voltage transformers (CVTs) have an isolating electromagnetic voltage transformer in parallel with the capacitor closest to ground. This produces an output in the region of 50VA which is used to drive the protection devices. The internal impedance of the CVT (and hence the size of the capacitors) necessary to deliver this power is dictated by the magnitude of this output.

It is useful for the transient behaviour of the signal on the power line to be mirrored accurately at the output of the CVT for monitoring purposes. However, the electromagnetic voltage transformer has a non-uniform frequency response. It tends to store energy, thereby distorting transients. It has been proposed to substitute the electromagnetic voltage transformer with an electronic isolator circuit with a high input impedance. The voltage drop across the capacitor in the stack closest to ground is used as the input to the isolator circuit, which in turn produces an optical output signal proportional to the monitored voltage. The optical output signal is then transmitted across the substation to a complementary circuit which reconstitutes the output voltage and power of the CVT.

The advantage of using an electronic isolator rather than an electromagnetic voltage transformer is that the accuracy is enhanced, since any transient conditions are more faithfully reproduced.

The installation of each circuit breaker and each CVT is a labour intensive exercise. Each item has had to be installed separately.

It is an object of the present invention to provide a switchgear device which at least alleviates these problems of the prior art.

According to the present invention there is provided a switchgear device as claimed in claim 1. Optional features are set forth in the claims appended thereto.

The inventor has appreciated that it is possible to realise significant savings in the cost of constructing an electricity substation if the number of devices that have to be installed can be reduced.

Since the electronic isolator has a high input impedance, the series of capacitors is effectively buffered. The inventor has realised that it is therefore possible to reduce the size of the plurality of capacitors. Substantial advantages arise from employing electronic circuitry rather than an electromagnetic voltage transformer. In particular, the CVT is now small enough to be located along with a circuit breaker in a standard single-break circuit breaker housing because of the reduction in size of the capacitors. This substantially reduces the number of separate switchgear devices that have to be installed in an electricity substation. Since the installation of the devices themselves is a significantly expensive part of a substation, the financial benefit is substantial.

Preferably, the housing contains an insulator and a base, the insulator comprising, for example, first and second stacks of insulator material mounted on the base and separated by the first terminal, the second terminal being mounted on the end of the second stack remote from the base.

Preferably, the electronic isolator, which may include a microprocessor, is located in the base, and substantially all of the capacitors and the circuit breaker are in the insulator.

In one preferred embodiment, the isolator is connected via a cable to signal conditioning means, the signal conditioning means being outside of the housing. The cable may be a coaxial cable or a fibre-optic cable, for example. Fibre-optic cable is particularly attractive as it overcomes the problem of electromagnetic noise which tends to affect coaxial cables .

The circuit breaker may comprise first and second contacts between the first and second electrical terminals, and a contact actuator mechanism. If the switchgear device has a base, it is preferable that the drive mechanism is located there.

The present invention can be put into practice in various ways one of which will now be described by way of example with reference to the accompanying drawings in which:
Figure 1 shows a switchgear device according to the present invention including a circuit breaker; and,
Figure 2 shows a schematic diagram of an isolator circuit and a complementary circuit for driving protection relays.

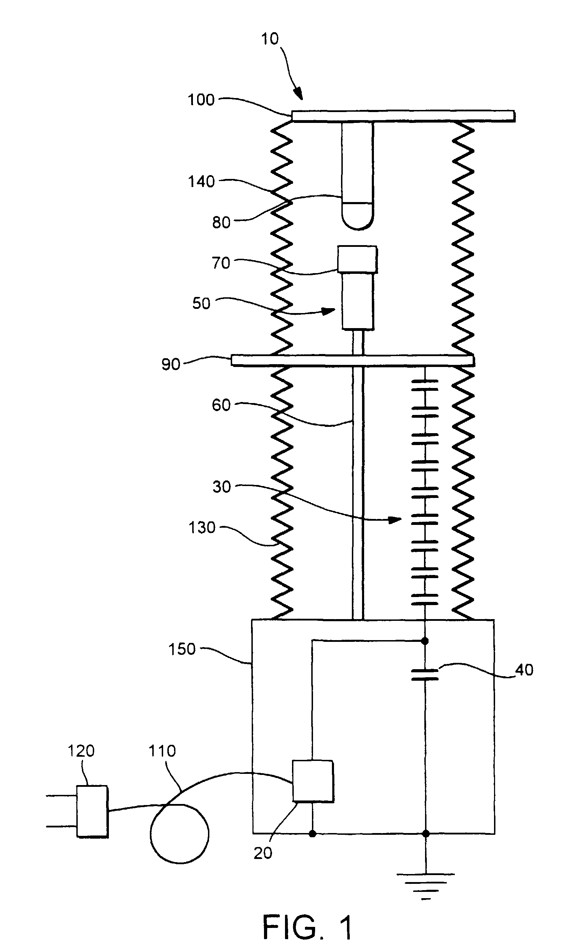

Referring to Figure 1, a switchgear device is shown generally at 10. The device 10 comprises a base unit 150, a lower insulator 130 situated on the base unit, and an upper insulator 140 on top of the lower insulator, the two insulators being separated by a first, lower terminal 90. A second, upper terminal 100 is positioned on top of the upper insulator 140. The lower insulator 130 provides mechanical support for the upper insulator 140 as well as insulation for the first terminal 90. The insulators are typically constructed as a stack of shedded porcelain collars or other commercially available insulating materials as will be familiar to those skilled in the art. Each stack is filled with sulphur hexaflouride (SF₆) which has good insulating and arc quenching properties.

A stack of capacitors 30 is connected in series between the first terminal 90 and a ground terminal. Each of the capacitors is of the polypropylene type with a total capacitance for the stack 30 of around 1 nanofarad (nF). An electronic isolator circuit 20 is connected in parallel across the lower capacitor 40 of the stack 30 which is connected to ground.

As shown in Figure 1, a circuit breaker 50 is located between the second terminal 100 and the first terminal 90. This circuit breaker is of the "single break" type, and comprises a hydraulic actuator mechanism (not shown) within the base unit 150. The hydraulic actuator mechanism is attached to a connecting rod 60 located in the lower insulator 130, the end of the rod 60 distal from the hydraulic actuator mechanism being attached to a first breaker contact 70 in the upper insulator 140. A second breaker contact 80 is also located in the upper insulator 140, and is attached to the second terminal 100. The lower insulator (130) thus conveniently provides mechanical coupling of the first breaker contact 70 to the grounded hydraulic actuator mechanism.

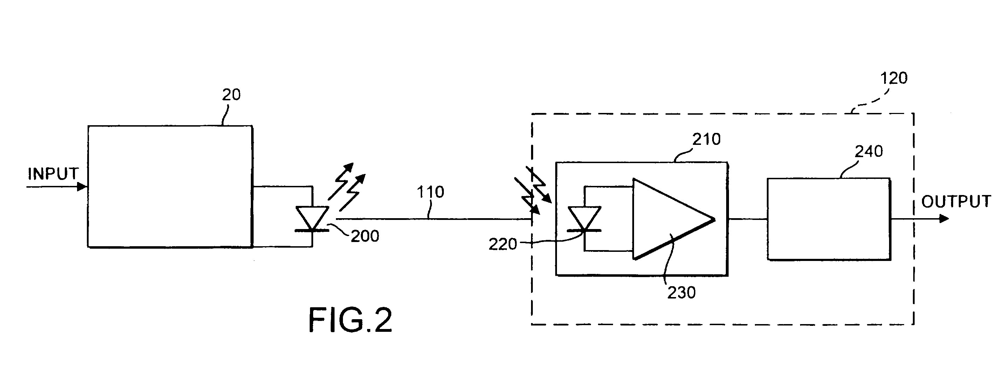

The isolator circuit 20 is connected to a complementary receiver circuit 120 via a fibre-optic cable 110. The arrangement is shown in schematic form in Figure 2. Here, the voltage across the lower end capacitor 40 of the capacitor stack 30 of Figure 1 is used as an input to the isolator circuit 20. The isolator 20 generates a signal suitable for transmission along the fibre-optic cable 110, using a pulsed laser diode 200. This is preferable as the fibre-optic cable is immune to the substantial electromagnetic interference in an electricity substation.

The signal generated by the diode 200 is received at the complementary receiver circuit 120 by a detector 210 comprising a photodetector 220 and suitable amplifier circuitry 230 to amplify the low power electrical output signal from the photodiode 200. The output from the detector 210 enters a decoder 240 which converts the digital transmission signal protocol used by the isolator circuit 20 and detector 210 into a protocol suitable for use with a protection relay. The protection relay or relays may be of the type that require only minimal input power, such as is manufactured by A.B.B. Switchgear A.B. of Sweden. Thus, the isolator circuit 20 only needs to provide a very low level output. The protection relays quickly switch out faulted sections of the power system, thus preventing any slowdown in the localised electricity generator from causing a loss in synchronism with the rest of the power system.

The electronic circuit 20 has a high input impedance and the capacitor stack 30 is thus buffered. The reduced output power requirement relative to the electromagnetic voltage transformer, in particular, allows the physical size and capacitance of each capacitor in the stack 30 of Figure 1 to be reduced significantly for a similar voltage rating. As the capacitor stack 30 occupies the biggest proportion of space within the hollow insulator 130, this reduction in size can be used in the present invention to particular advantage.

In order to protect the components in the substation in case of a fault, separate high voltage circuit breakers have traditionally been employed in conjunction with protection relays to switch out faulty sections of the power system. The more circuit breakers that are provided on the system, the smaller the part of the system that has to be switched out in order to correct the fault. The introduction of the isolator circuit 20, which consequentially reduces the size of the capacitors in the stack 30 and obviates the need for an electromagnetic voltage transformer, permits both the CVT and circuit breaker components to fit into a single body designed for a circuit breaker alone, as is shown in Figure 1.

The principle cost of a CVT arises from its insulation. The typical electrical substation has 50 circuit breakers currently costing around £50,000 each, and 50 CVTs costing around £12,000. In addition, the cost of installing and commissioning a CVT is currently in the region of £12,000. By locating the components of the CVT within the same body as a circuit breaker in the present invention, both the equipment and installation costs are substantially reduced, leading to potential savings of the order of £1,000,000 for a typical substation.

Although a preferred embodiment has been described, it will be appreciated that the invention may be put into practice in a number of ways. For example, the isolator circuit 20 may be connected to the complementary receiver circuit 120 via a less expensive coaxial cable rather than a fibre-optic cable, the former being suitable where electrical noise is not such a significant problem, for example. Additionally, the signal generated by the isolator circuit may be an analogue signal rather than a digital signal, the amplitude of the analogue signal can be much lower than previously possible which avoids the need for a power amplifier. The polypropylene-insulated capacitors may be replaced by any suitable capacitance in order to step down the voltage from the first, lower terminal 90. Additionally, the circuit breaker may consist of two or more contact assemblies rather than the one illustrated in Figure 1, and may additionally or alternatively use a spring or other mechanism rather than a hydraulic mechanism.

## Claims

1. A switchgear device (10) comprising a housing (130,140,150), first (90), second (100) and earth electrical terminals, a circuit breaker (50) in the housing connected between the first (90) and second (100) terminals, a capacitor voltage transformer comprising a stack of serially connected capacitors (30,40) connected between the first terminal (90) and the earth terminal, and an electronic isolator (20) connected across at least one (40) of the capacitors and the earth terminal, the isolator (20) being operable to provide an output signal that is indicative of the voltage across the first (90) and earth terminals, CHARACTERISED IN THAT the stack of serially connected capacitors (30,40) is also in the housing (130,140,150).

2. A device as claimed in claim 1, in which the housing includes an insulator (130,140) and a base (150).

3. A device as claimed in claim 2, in which the insulator comprises first (130) and second (140) stacks of insulator material, the first stack (130) being mounted on the base (150) and separated from the second stack (140) by the first terminal (90), the second terminal (100) being mounted on the end of the second stack (140) remote from the base (150).

4. A device as claimed in claim 2 or claim 3, in which the electronic isolator (20) is located in the base (150).

5. A device as claimed in claim 2, 3 or 4, in which substantially all of the capacitors (30) and the circuit breaker (50) are in the insulator.

6. A device as claimed in any one of the preceding claims, in which the electronic isolator (20) is connected via a cable (110) to signal conditioning means which are outside of the housing.

7. A device as claimed in claim 6, in which the cable is a coaxial cable or a fibre-optic cable (110).

8. A device as claimed in any one of the preceding claims, in which the electronic isolator is digital and includes a microprocessor.

9. A device as claimed in any one of the preceding claims, in which the circuit breaker (50) comprises first (70) and second (80) contacts respectively electrically connected with the first (90) and second (100) terminals, and an actuator mechanism (60) operable to move the first contact (70) relative to the second contact (80) in response to an actuation signal.

10. A device as claimed in claim 9 as dependent upon at least claim 2, in which the actuator mechanism is in the base (150).

## Patentansprüche

1. Schaltvorrichtung (10), umfassend ein Gehäuse (130, 140, 150), einen ersten (90), einen zweiten (100) elektrischen Anschluß sowie einen elektrischen Erdanschluß, einen Trennschalter (50) im Gehäuse, der zwischen den ersten (90) und den zweiten (100) Anschluß geschaltet ist, einen Kondensator-Spannungswandler, welcher eine Baugruppe aus seriell verbundenen Kondensatoren (30, 40) umfaßt, und zwischen den ersten Anschluß (90) und den Erdanscbluß geschaltet ist, sowie einen elektronischen Isolator (20), welcher über zumindest einen (40) der Kondensatoren zum Erdanschluß geschaltet ist, wobei der Isolator (20) betreibbar ist, um ein Außgangssignal zu erzeugen, welches für die zwischen dem ersten (90) und dem Erdanschluß anliegende Spannung aussagefähig ist, dadurch gekennzeichnet, daß sich die Baugruppe der seriell verbundenen Kondensatoren (30, 40) ebenfalls im Gehäuse (130, 140, 150) befindet.

2. Vorrichtung nach Anspruch 1, in welcher das Gehäuse einen Isolator (130, 140) und eine Basis (150) umfaßt.

3. Vorrichtung nach Anspruch 2, in welcher der Isolator erste (130) und zweite (140) Baugruppen aus Isoliermaterial umfaßt, wobei die erste Baugruppe (130) an der Basis (150) befestigt und von der zweiten Baugruppe (140) durch einen ersten Anschluß (90) getrennt ist, und der zweite Anschluß (100) an dem von der Basis (150) entfernteren Ende der zweiten Baugruppe (140) befestigt ist.

4. Vorrichtung nach Anspruch 2 oder 3, in welcher der elektronische Isolator (20) in der Basis (150) angeordnet ist.

5. Vorrichtung nach Anspruch 2, 3 oder 4, in welcher sich im wesentlichen alle Kondensatoren (30) und der Trennschalter (50) im Isolator befinden.

6. Vorrichtung nach einem oder mehreren der vorhergehenden Ansprüche, in welcher der elektronische Isolator (20) über ein Kabel (110) mit einer Signalaufbereitungseinrichtung verbunden ist, welche sich außerhalb des Gehäuses befindet.

7. Vorrichtung nach Anspruch 6, in welcher das Kabel ein Koaxialkabel oder ein faseroptisches Kabel (110) ist.

8. Vorrichtung nach einem oder mehreren der vorhergehenden Ansprüche, in welcher der elektronische Isolator digital ist und einen Mikroprozessor umfaßt.

9. Vorrichtung nach einem oder mehreren der vorhergehenden Ansprüche, in welcher der Trennschalter (50) einen ersten (70) und einen zweiten (80) Kontakt umfaßt, die jeweils mit dem ersten (90) und zweiten (100) Anschluß elektrisch verbunden sind, sowie einen Antriebsmechanismus (60), welcher betreibbar ist, um in Reaktion auf ein Betätigungssignal den ersten Kontakt (70) relativ zum zweiten Kontakt (80) zu bewegen.

10. Vorrichtung nach Anspruch 9 sowie zumindest nach Anspruch 2, in welcher der Antriebsmechanismus in der Basis (150) angeordnet ist.

## Revendications

1. Appareil de commutation (10) comprenant un logement (130, 140, 150), une première (90) et deuxième (100) borne électrique ainsi qu'une borne de terre, un disjoncteur (50) dans le logement connecté entre les première (90) et deuxième (100) bornes, un diviseur capacitif consistant en un empilage de condensateurs montés en série (30, 40) raccordé entre la première borne (90) et la borne de terre, et un dispositif électronique d'isolement (20) connecté entre au moins un condensateur (40) et la borne de terre capable de délivrer un signal de sortie qui est indicateur de la tension existant entre la première borne (90) et la borne de terre, caractérisé en ce que l'empilage de condensateurs montés en série (30, 40) se trouve également dans le logement (130, 140, 150).

2. Appareil selon la revendication 1, dont le logement comprend un isolateur (130, 140) et une base (150).

3. Appareil selon la revendication 2, dans lequel l'isolateur comporte un premier (130) et un second (140) empilage de matériau isolant, le premier empilage (130) étant monté sur la base (150) et étant séparé du second empilage (140) par la première borne (90), la deuxième borne (100) étant montée à l'extrémité du second empilage (140) qui est éloigné de la base (150).

4. Appareil selon la revendication 2 ou la revendication 3, dans lequel l'isolateur électronique (20) est situé dans la base (150).

5. Appareil selon la revendication 2, 3 ou 4, dans lequel se trouvent montés la majorité des condensateurs (30) et le disjoncteur (50).

6. Appareil selon l'une quelconque des revendications précédentes, dans lequel le dispositif électronique d'isolement (20) est raccordé, via un câble (110), à des moyens de mise en forme du signal qui se trouvent à l'extérieur du logement.

7. Appareil selon la revendication 6, dans lequel le câble est soit du type coaxial, soit du type à fibre optique (110).

8. Appareil selon l'une quelconque des précédentes revendications, dans lequel l'isolation électronique est numérique et comporte un microprocesseur.

9. Appareil selon l'une quelconque des revendications précédentes, dans lequel le disjoncteur (50) comporte un premier contact (70) et un second contact (80), respectivement connectés aux première (90) et deuxième (100) bornes, et un mécanisme de commande (60) utilisable pour déplacer le premier contact (70) par rapport au second contact (80) en réponse à un signal de commande.

10. Appareil selon la revendication 9, comme dépendant au moins de la revendication 2, dans lequel le mécanisme de commande se trouve dans la base (150).
